# EUROPÄISCHE PATENTSCHRIFT

(11) **EP 1 460 296 B1**
(45) Veröffentlichungstag und Bekanntmachung des Hinweises auf die Patenterteilung: **31.08.2005**
(21) Anmeldenummer: 03029998.6
(22) Anmeldetag: 31.12.2003
(51) Int. Cl.: F16D 3/84

(54) **Abdichtanordnung für den Längenausgleich einer Kreuzgelenkwelle**
Sealing arrangement for the length compensation of a universal shaft
Garniture d'étanchéité pour la compensation de la longeur d'un arbre à joint de Cardan

(30) Priorität: 18.03.2003 DE 10312057
(43) Veröffentlichungstag der Anmeldung: 22.09.2004
(73) Patentinhaber: Spicer Gelenkwellenbau GmbH & Co. KG, 45143 Essen (DE)
(72) Erfinder: Schultze, Hans-Jürgen, 46240 Bottrop (DE); Meineke, Manfred, 58454 Witten (DE); Müller, Erhard, 45529 Hattingen (DE)
(74) Vertreter: Harwardt, Günther

(56) Entgegenhaltungen:
- US-A- 2 116 290
- US-A- 3 633 383
- US-A- 3 942 336

## Beschreibung

Die Erfindung betrifft eine Abdichtanordnung für den Längenausgleich einer Kreuzgelenkwelle, welcher ein rohrförmiges erstes Wellenelement mit einer Innenverzahnung und ein zweites Wellenelement mit einer zur Innenverzahnung passenden und darin entlang einer Längsachse verstellbaren Außenverzahnung aufweist, wobei eines der beiden Wellenelemente außen eine kreiszylindrische Anlagefläche aufweist, umfassend eine rohrförmige Dichthülse aus Metall, die ein erstes Ende aufweist, das mit einem der beiden Wellenelemente oder einem damit verbundenen Bauteil fest verbunden ist, in die das die Anlagefläche aufweisende Wellenelement eintaucht unddie an einem zweiten Ende eine Stirnfläche aufweist, sowie einen hülsenförmigen Dichtungsträger aus Metall, dem Dichtmittel zugeordnet sind, wobei die Dichtmittel einen Dichtabschnitt aus einen Elastomer aufweisen, der mindestens eine Dichtlippe zur Anlage an der Anlagefläche aufweist.

In der US 36 33 383 ist eine Kreuzgelenkwelle beschrieben, welche ein über ein Anschlussrohr mit einer Gelenkgabel eines ersten Kreuzgelenkes verbundenes rohrförmiges erstes Wellenelement aufweist. Das erste Wellenelement besitzt in seiner Längsbohrung eine Innenverzahnung, deren Zähne parallel zu einer Längsachse verlaufen. Das erste Wellenelement besitzt ferner außen eine kreiszylindrische Außenfläche. In der mit der Innenverzahnung versehenen Längsbohrung des ersten Wellenelementes ist ein zweites Wellenelement mit einer Außenverzahnung entlang der Längsachse verstellbar aufgenommen. Das zweite Wellenelement ist mit einer Gelenkgabel eines zweiten Kreuzgelenkes verbunden. An einer zylindrischen Sitzfläche der Gelenkgabel des zweiten Kreuzgelenkes ist eine Dichthülse mit ihrem ersten Ende absatzweise angeschweißt. Sie ist koaxial um das zweite Wellenelement angeordnet. Sie trägt an ihrem zweiten Ende einen Dichtungsträger, der mit einem Halteabschnitt in die Dichthülse von deren zweiten Ende her eingesteckt und mit dieser diskontinuierlich verschweißt ist. Der Dichtungsträger bildet zwei Kammern, von denen die dem zweiten Kreuzgelenk entfernte Kammer nach außen in Richtung zum ersten Kreuzgelenk offen ist. In der durch eine Wand von dieser abgetrennten Kammer befindet sich ein Dichtring, der gegenüber der Außenfläche des ersten Wellenelementes abdichtet. Die zum ersten Kreuzgelenk hin offene Kammer weist einen Abstreifring auf, der eine nach außen hervorragende Abstreiflippe besitzt, die dazu dient, Schmutz, der sich auf der Außenfläche abgesetzt hat, abzustreifen und damit den Dichtungsring zu schützen. Der hülsenförmige Dichtungsträger ist über eine an mehreren Stellen unterbrochene Schweißnaht mit der Dichthülse verbunden. Die Dichtfunktion zwischen Dichthülse und Dichtungsträger muss daher durch den Sitz der Dichthülse auf dem Dichtungsträger erzeugt werden.

Von Nachteil hierbei ist, dass, da ein in die Dichthülse eingreifender Abschnitt an dem Dichtungsträger vorgesehen ist, sich der Durchmesser der Dichthülse vergrößert. Von Nachteil ist ferner, dass die Masse vergrößert ist. Da der Dichtungsträger lang ist, wird der Längenausgleich bei kurzbauenden Gelenkwellen begrenzt. Der Dichtungsträger ist aufgrund seiner Form nur spanend herstellbar.

Der Erfindung liegt daher die Aufgabe zugrunde, eine Abdichtanordnung zu schaffen, die ein geringes Gewicht aufweist und leichter und kostengünstiger herstellbar ist und längere Verschiebungen auch bei kurzbauendem Längenausgleich zulässt.

Diese Aufgabe wird erfindungsgemäß dadurch gelöst, dass der Dichtabschnitt mit den Dichtungsträger unlösbar verbunden ist, und dass der Dichtungsträger einen Verbindungsabschnitt aufweist, welcher der Dichthülse zugewandt eine Gegenstirnfläche aufweist, die formmäßig der Stirnfläche der Dichthülse angepasst ist, und stumpf gegen diese stößt und dass die Dichthülse mit ihrer Stirnfläche und der Dichtungsträger mit seiner Gegenstirnfläche stumpf aneinander stoßend durch eine eine geringe Wärmeeinbringung erfordernde und sich über den vollen Umfang erstreckende Schweißnaht verbunden sind.

Von Vorteil bei dieser Ausbildung ist, dass eine platzsparende Anordnung getroffen wird, wobei die Dichthülse und der Dichtungsträger unmittelbar aneinander stoßen und dicht über die Schweißnaht miteinander verbunden sind. Der Dichtungsträger kann zusammen mit dem Dichtabschnitt als separates Bauteil gefertigt werden. Dadurch, dass eine Schweißung genutzt wird, die nur einen geringen Wärmeeintrag erfordert, wird der Dichtabschnitt aus einem Elastomer nicht nachteilig beeinflusst. Ferner lassen sich beide Teile dadurch mit einer günstigen Rundlaufeigenschaft verbinden, dass der Dichtungsträger nur eine geringe Masse aufweist. Die Schweißnaht lässt sich gleichmäßiger gegenüber einer Schweißnaht, bei der Schweißmaterial zugeführt wird, erzeugen, wodurch die Rundlaufeigenschaften verbessert werden.

Vorzugsweise ist die Schweißnaht durch eine Elektronenstrahl- oder Laserstrahlschweißung erzeugt. Solche Schweißnähte erfordern nur eine geringe Wärmeeinbringung in die miteinander zu verbindenden Bauteile. Darüber hinaus wird durch eine solche Schweißung keine zusätzliche nachteilige Wirkung hinsichtlich des Rundlaufs der Dichthülse und des Dichtungsträgers zueinander bewirkt.

Um den Spalt zwischen dem die Anlagefläche aufweisenden Bauteil und der Innenfläche der Dichthülse möglichst gering zu halten, ist vorgesehen, dass der Dichtabschnitt einem Abschnitt des Dichtungsträgers zugeordnet ist, der gegenüber dem die Gegenstirnfläche aufweisenden Verbindungsabschnitt einen vergrößerten Durchmesser aufweist.

Ein bevorzugtes Ausführungsbeispiel der Erfindung ist in der Zeichnung schematisch dargestellt.

Es zeigt
- Figur 1: eine Kreuzgelenkwelle mit einer erfindungsgemäßen Abdichtanordnung gemäß Figur 2,
- Figur 2: das Detail X aus Figur 1 im vergrößerten Maßstab, in der eine Ausführungsform der Dichtanordnung im Halblängsschnitt dargestellt ist.

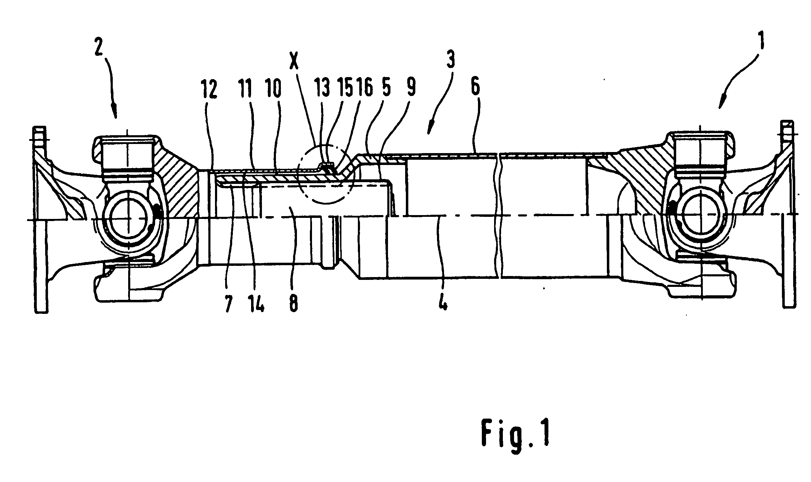

Die Kreuzgelenkwelle gemäß Figur 1 umfasst ein erstes Kreuzgelenk, welches eine erste Gelenkgabel mit einem Flansch zum Anschluß an ein treibendes oder getriebenes Bauteil, eine zweite Gelenkgabel und ein beide gelenkig verbindendes Zapfenkreuzaufweist. Das zweite Kreuzgelenk 2 entspricht dem ersten Kreuzgelenk 1. Ferner umfasst die Kreuzgelenkwelle einen Längenausgleich 3. Der Längenausgleich 3 besitzt ein auf einer Längsachse 4 ausgerichtetes rohrförmiges erstes Wellenelement 5. Dieses ist über ein Anschlussrohr 6 mit der zweiten Gelenkgabel des ersten Kreuzgelenkes 1 drehfest verbunden. Das erste Wellenelement 5 hat eine Längsbohrung, in der eine Innenverzahnung 7 angeordnet ist. Deren Zähne erstrecken sich parallel zur Längsachse und sind um dieselbe umfangsverteilt angeordnet.

Mit der zweiten Gelenkgabel des zweiten Kreuzgelenkes 2 ist ein zapfenförmiges zweites Wellenelement verbunden. Dieses weist einen Abschnitt mit einer Außenverzahnung auf. Die Außenverzahnung 9 ist zur Innenverzahnung 7 passend ausgebildet und greift mit ihren Zähnen zwischen die der Innenverzahnung 7 so ein, dass zwischen beiden ein Drehmoment um die Längsachse 4 übertragen werden kann und darüber hinaus beide zueinander relativ entlang der Längsachse 4 verstellbar sind.

Zwischen dem mit der Außenverzahnung 9 versehenen Abschnitt des zweiten Wellenelements 8 und dem Bereich, der mit der zweiten Gelenkgabel des zweiten Kreuzgelenkes 2 verbunden ist, befindet sich ein gegenüber der Außenverzahnung im Durchmesser verringerter Abschnitt. Ferner weist das erste Wellenelement 5 außen eine kreiszylindrische Anlagefläche 10 auf. Koaxial um das erste Wellenelement 5 und das zweite Wellenelement 8 ist eine Dichthülse 11 angeordnet, die mit ihrem ersten Ende 12 entweder unmittelbar mit dem zweiten Wellenelement 8 oder der zweiten Gelenkgabel des zweiten Kreuzgelenkes 2, an das das zweite Wellenelement 8 angeschlossen ist, verbunden ist. An das zweite Ende 13 der Dichthülse 11 ist ein Dichtungsträger 15 mit einem Dichtabschnitt 16 angeschlossen. Die Dichthülse 11 weist eine Hülseninnenfläche 14 auf, die zu der Anlagefläche 10 mit radialem Abstand angeordnet ist. Die Abdichtanordnung dient dazu, den Eintritt von Schmutz oder Feuchtigkeit in die Längsverschiebung und den Austritt von Schmierfett aus derselben zu verhindern. Solche Kreuzgelenkwellen werden zur Weiterleitung von Drehmomenten, beispielsweise zwischen einem Motor und einem Getriebe, allgemein im Maschinenbau oder aber bei Kraftfahrzeugen, insbesondere Nutzfahrzeugen, eingesetzt.

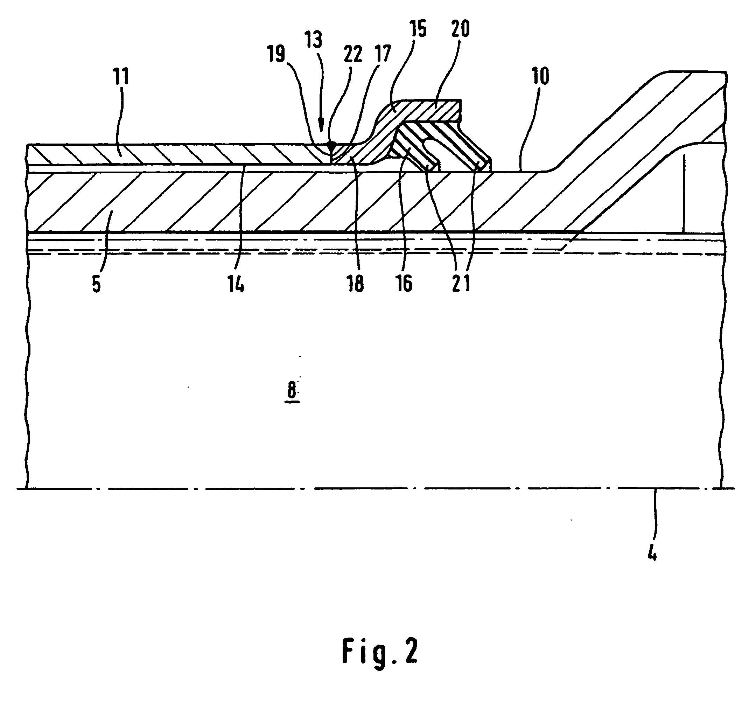

Die Verbindung der Dichthülse 11 mit dem Dichtungsträger 15 und der Aufbau desselben sind anhand der Einzelheit X gemäß Figur 1, die in Figur 2 vergrößert dargestellt ist, näher erläutert.

Die Figur 2 zeigt eine Ausführungsform, bei der die Dichthülse 11 an ihrem zweiten Ende 13 mit einer Stirnfläche 17 versehen ist. Die Stirnfläche 17 bildet eine Ebene, die die Längsachse 4 rechtwinklig schneidet. Bei der Dichthülse 11 handelt es sich um ein Zylinderrohr aus Metall, insbesondere Stahl.

Der Dichtungsträger 15 ist als im Durchmesser gestufte Hülse dargestellt. Er besitzt einen Verbindungsabschnitt 18 mit einer Gegenstirnfläche 19, die eine Ebene bildet, die die Längsachse 4 rechtwinklig schneidet. Stirnfläche 17 und Gegenstirnfläche 19 sind gegengleich ausgebildet und stoßen stumpf gegeneinander. Der im Verhältnis zum rohrförmigen und zylindrisch gestalteten Verbindungsabschnitt 18 im Durchmesser mit einer Stufe vergrößerte Abschnitt 20 ist unlösbar mit dem Dichtabschnitt 16 verbunden, der die zwei Dichtlippen 21 aufweist, die entlang der Längsachse 4 hintereinander angeordnet sind und von der Dichthülse 11 weg in Richtung auf die Anlagefläche 10 des ersten Wellenelementes 5 vorstehen und an dieser dichtend anliegen. Bei dem Dichtabschnitt 16 mit den beiden Dichtlippen 21 handelt es sich um einen aus einem Elastomer gebildeten Abschnitt, der mit dem Abschnitt 20 und dem Stufenabschnitt zwischen dem Verbindungsabschnitt 18 und dem Abschnitt 20 unlösbar, beispielsweise durch Anvulkanisieren, verbunden ist. Der Dichtungsträger 15 ist beispielsweise ein Blechformteil, an welches der Dichtabschnitt 16 mit den Dichtlippen 21 vor dem Verbinden mit der Dichthülse 11 angeformt wurde. Die Dichthülse 11 wird mit dem Dichtungsträger 15 vor der Montage an dem zweiten Wellenelement 8 oder einem damit verbundenen Bauteil, beispielsweise einer zugehörigen Gelenkgabel, mittels eines eine geringe Wärmeeinbringung bewirkenden Schweißverfahrens, beispielsweise durch Laserschweißen, verbunden. Diese Schweißnaht ist mit 22 bezeichnet und verläuft im Stoßbereich zwischen der Stirnfläche 17 und der Gegenstirnfläche 19 um die Dichthülse 11 bzw. den Verbindungsabschnitt 18 des Dichtungsträgers 15 außen kontinuierlich um, so dass sich insgesamt eine dichte Verbindung ergibt. Bevorzugt werden bei der Herstellung der Verbindung die Dichthülse 11 und der Dichtungsträger 15 auf einem Zentrierdom oder dergleichen Zentriermittel aufgenommen und verschweißt.

Der Dichtungsträger 15 besteht aus dem gleichen Metall wie die Dichthülse 11, also bevorzugt aus Stahl.

### Bezugszeichenliste

- 1: erstes Kreuzgelenk
- 2: zweites Kreuzgelenk
- 3: Längenausgleich
- 4: Längsachse
- 5: erstes Wellenelement
- 6: Anschlussrohr
- 7: Innenverzahnung
- 8: zweites Wellenelement
- 9: Außenverzahnung
- 10: Anlagefläche
- 11: Dichthülse
- 12: erstes Ende
- 13: zweites Ende
- 14: Hülseninnenfläche
- 15: Dichtungsträger
- 16: Dichtabschnitt
- 17: Stirnfläche der Dichthülse
- 18: Verbindungsabschnitt
- 19: Gegenstirnfläche
- 20: Abschnitt
- 21: Dichtlippe
- 22: Schweißnaht

## Patentansprüche

1. Abdichtanordnung für einen Längenausgleich (3) einer Kreuzgelenkwelle, welcher ein rohrförmiges erstes Wellenelement (5) mit einer Innenverzahnung (7) und ein zweites Wellenelement (8) mit einer zur Innenverzahnung (7) passenden und darin entlang einer Längsachse (4) verstellbaren Außenverzahnung (9) aufweist, wobei eines der beiden Wellenelemente (5,8) außen eine kreiszylindrische Anlagefläche (10) aufweist, umfassend eine rohrförmige Dichthülse (11) aus Metall, die ein erstes Ende (12) aufweist, das mit einem der beiden Wellenelemente (8) oder einem damit verbundenen Bauteil fest verbunden ist, in die das die Anlagefläche (10) aufweisende Wellenelement (5) eintaucht und die an einem zweiten Ende (13) eine Stirnfläche (17) aufweist, sowie einen hülsenförmigen Dichtungsträger (15) aus Metall, dem Dichtmittel zugeordnet sind, wobei die Dichtmittel einen Dichtabschnitt aus einen Elastomer aufweisen, der mindestens eine Dichtlippe (21) zur Anlage an der Anlagefläche (10) aufweist.
**dadurch gekennzeichnet,**
**dass** der Dichtabschnitt (16) mit den Dichtungsträger (15), unlösbar verbunden ist, und dass der Dichtungsträger (15) einen Verbindungsabschnitt (18) aufweist, welcher der Dichthülse (11) zugewandt eine Gegenstirnfläche (19) aufweist, die formmäßig der Stirnfläche (17) der Dichthülse (11) angepasst ist, und stumpf gegen diese stößt und dass die Dichthülse (11) mit ihrer Stirnfläche (17) und der Dichtungsträger (15) mit seiner Gegenstirnfläche (19) stumpf aneinander stoßend durch eine eine geringe Wärmeeinbringung erfordernde und sich über den vollen Umfang erstreckende Schweißnaht (22) verbunden sind.

2. Abdichtanordnung nach Anspruch 1,
**dadurch gekennzeichnet,**
**dass** die Schweißnaht (22) durch eine Elektronen- oder Laserstrahlschweißung erzeugt ist.

3. Abdichtanordnung nach Anspruch 1,
**dadurch gekennzeichnet,**
**dass** der Dichtabschnitt (16) einem Abschnitt (20) des Dichtungsträgers (15) zugeordnet ist, der gegenüber dem die Gegenstirnfläche (19) aufweisenden Verbindungsabschnitt (18) einen vergrößerten Durchmesser aufweist.

## Claims

1. Sealing arrangement for a length compensation (3) of a universal joint shaft, which has a tubular first shaft element (5) with internal splines (7) and a second shaft element (8) with outer splines (9) fitting to the internal splines (7) and adjustable therein along a longitudinal axis (4), wherein one of the two shaft elements (5, 8) has externally a circular cylindrical contact face (10), the sealing arrangement comprising a tubular sealing sleeve (11) made from metal and having a first end (12), which is firmly connected to one of the two shaft elements (8) or a component connected thereto, into which the shaft element (5) having the contact face (10) extends into and having at a second end (13) an end face (17), and comprising a sleeve-like sealing carrier (15) made from metal, to which sealing means are arranged, wherein the sealing means comprise a sealing portion made from an elastomer, which has at least one sealing lip (21) for contacting the contact face (10)
**characterised in that**
the sealing portion (16) is non-detachably connected to the sealing carrier (15) and that the sealing carrier (15) has a connection portion (18), which has a counter end face (19), facing the sealing sleeve (11) and adapted shape-wise to the end face (17) of the sealing sleeve (11), and is butt-jointed to the same and that the sealing sleeve (11) with its end face (17) and the sealing carrier (15) with its counter end face (19) are connected in a butt-jointed manner by a welding seam (22) requiring a low heat introduction and extending over the complete circumference.

2. Sealing arrangement according to claim 1,
**characterised in that**
the welding seam (22) is produced by electron-beam welding or laser beam welding.

3. Sealing arrangement according to claim 1,
**characterised in that**
the sealing portion (16) is arranged to a portion (20) of the sealing carrier (15), having compared to the connection portion (18), having the counter end face (19), an enlarged diameter.

## Revendications

1. Agencement d'étanchéité pour une compensation de longueur (3) d'un arbre à joint de Cardan, laquelle présente un premier élément d'arbre (5) tubulaire avec une denture intérieure (7) et un deuxième élément d'arbre (8) avec une denture extérieure (9) adaptée à la denture intérieure (7) et réglable dans celle-ci le long d'un l'axe longitudinal (4), un des deux éléments d'arbre (5, 8) présentant à l'extérieur une surface d'appui (10) cylindrique circulaire, comprenant une douille d'étanchéité (11) tubulaire en métal qui présente une première extrémité (12) qui est reliée de manière solidaire à l'un des deux éléments d'arbre (8) ou à un composant relié à celui-ci, douille dans laquelle plonge l'élément d'arbre (5) présentant la surface d'appui (10) et qui présente à une deuxième extrémité (13) une surface frontale (17), ainsi qu'un support de joint (15) en métal en forme de douille, auquel sont associés des moyens d'étanchéité, les moyens d'étanchéité présentant un tronçon d'étanchéité en un élastomère qui présente au moins une lèvre d'étanchéité (21) destinée à venir en appui sur la surface d'appui (10), **caractérisé en ce que** le tronçon d'étanchéité (16) avec le support de joint (15) sont reliés de manière indétachable et **en ce que** le support de joint (15) présente un tronçon de liaison (18) qui présente une face frontale antagoniste (19) tournée vers la douille d'étanchéité (11), surface qui est adaptée à la forme de la face frontale (17) de la douille d'étanchéité (11) et qui vient se placer en bout à bout contre celle-ci, et **en ce que** la douille d'étanchéité (11), avec sa face frontale (17), et le support de joint (15), avec sa face frontale antagoniste (19) sont reliés en venant en bout à bout l'un contre l'autre par un cordon de soudure (22) nécessitant un apport de chaleur faible et s'étendant sur toute la périphérie.

2. Agencement d'étanchéité selon la revendication 1, **caractérisé en ce que** le cordon de soudure (22) est produit par un soudage par faisceau d'électrons ou faisceau laser.

3. Agencement d'étanchéité selon la revendication 1, **caractérisé en ce que** le tronçon d'étanchéité (16) est associé à un tronçon (20) du support de joint (15) qui présente un diamètre agrandi par rapport au tronçon de liaison (18) présentant la surface frontale antagoniste (19).
